# FASCICULE DE BREVET EUROPEEN

(11) **EP 2 340 718 B1**
(45) Date de publication et mention de la délivrance du brevet: **26.06.2013**
(21) Numéro de dépôt: 11151465.9
(22) Date de dépôt: 10.07.2007
(51) Int. Cl.: A23C 9/12, A47J 27/00

(54) **Appareil électrique prévu pour la réalisation de préparations culinaires en portions séparées**
Electric device for preparing food in seperate portions
Elektrisches Gerät zum Zubereiten von Lebensmitteln in unterteilten Portionen

(30) Priorité: 13.07.2006 FR 0606405
(43) Date de publication de la demande: 06.07.2011
(62) Demande divisionnaire de: 07823270.9
(73) Titulaire: SEB S.A., 69130 Ecully (FR)
(72) Inventeur: Perrier, Matthieu, 65310, Laloubère (FR); Rouches, Alexandre, 65310, Horgues (FR); Tompa, Carole, 65000, Tarbes (FR)
(74) Mandataire: Cémeli, Eric Philippe Laurent

(56) Documents cités:
- WO-A-2005/079364
- US-A- 5 896 811

## Description

La présente invention concerne le domaine technique des appareils électriques prévus pour la réalisation de préparations culinaires telles que yaourts, flans, crèmes, mousses, entremets, en portions séparées, notamment en portions individuelles.

La réalisation des yaourts, crèmes brûlées, mousses, flans et autres entremets nécessite le plus souvent une transformation (fermentation et/ou cuisson et/ou refroidissement) relativement longue, pouvant atteindre plusieurs heures. Les températures usuelles atteintes par les aliments pour la réalisation de ces préparations s'étendent entre quelques °C (pour la réalisation de mousses) et environ 85°C (pour la réalisation de crèmes brûlées).

Il est connu du document FR 2 311 522 un appareil électrique de cuisson à arrêt automatique pour entremets. Cet appareil comporte une enceinte de cuisson prévue pour recevoir plusieurs ramequins contenant les mets à cuire. Un dispositif de chauffe à inertie thermique permet d'atteindre une température de cuisson et de maintenir ladite température de cuisson avant d'entamer la phase de refroidissement. La construction proposée présente toutefois l'inconvénient d'être relativement délicate à mettre au point pour obtenir les évolutions de température souhaitées. De plus, cet appareil n'envisage pas de disposition particulière pour la phase de refroidissement. Il peut s'avérer nécessaire de déplacer les ramequins dans une enceinte réfrigérée en vue de leur consommation ou de leur conservation.

Il a été proposé dans le document WO 2005/079364 de réaliser un appareil de cuisson comportant un dispositif de chauffe utilisant un ou plusieurs éléments Peltier à effet thermoélectrique. Cet appareil comporte une cuve de cuisson agencée dans un boîtier fermé par un couvercle. Toutefois ce document n'envisage pas d'utiliser plusieurs récipients de cuisson.

Un objet de la présente invention est de proposer un appareil électrique pour la réalisation de préparations culinaires en portions séparées, dans lequel la transformation des préparations soit homogène d'un contenant à l'autre.

Un autre objet de la présente invention est de proposer un appareil électrique pour la réalisation de préparations culinaires en portions séparées, dans lequel la transformation des préparations soit homogène à l'intérieur d'un même contenant.

Un autre objet de la présente invention est de proposer un appareil électrique pour la réalisation de préparations culinaires en portions séparées, dans lequel les préparations peuvent être amenées à leur température de consommation idéale.

Ces buts sont atteints avec un appareil électrique pour la réalisation de préparations culinaires en portions séparées, comportant une enceinte recevant au moins deux récipients reposant sur un fond réalisé en matériau bon conducteur de chaleur et relié thermiquement à des moyens prévus pour modifier la température de l'enceinte, les moyens de chauffe comprenant des éléments à effet thermoélectrique disposés sous le fond, chacun des éléments à effet thermoélectrique étant disposé principalement en dessous de l'un des récipients, du fait que le fond présente des bossages supérieurs prévus pour recevoir les récipients. En d'autres termes, chacun des récipients associé à un élément à effet thermoélectrique bénéficie d'un chauffage ou d'un refroidissement individuel. Ces dispositions facilitent le positionnement des récipients sur le fond, et peuvent également contribuer à améliorer le transfert thermique entre le fond et les récipients. Ces dispositions permettent également d'obtenir une meilleure homogénéité de transformation des aliments à l'intérieur de chaque récipient ainsi qu'entre les différents récipients. Une telle construction peut s'avérer intéressante notamment avec des éléments à effet thermoélectrique de taille et/ou de puissance plus réduite, et/ou avec des récipients de taille plus importante.

Avantageusement alors, le ou l'un au moins des éléments à effet thermoélectrique peut être alimenté soit pour chauffer le fond, soit pour refroidir le fond. Cette disposition permet de réaliser de manière économique un appareil du type précité permettant de chauffer mais aussi de refroidir les préparations. En alternative, le ou l'un au moins des éléments à effet thermoélectrique peut être alimenté de façon à pouvoir uniquement chauffer l'enceinte ou à pouvoir uniquement refroidir l'enceinte.

Avantageusement encore, le ou l'un au moins des éléments à effet thermoélectrique est associé à un ventilateur. Cette disposition permet d'évacuer les calories lors de l'utilisation dudit élément à effet thermoélectrique en refroidissement. Si désiré, un même ventilateur peut être associé à plusieurs éléments à effet thermoélectrique.

Selon un mode de réalisation avantageux, le ou l'un au moins des éléments à effet thermoélectrique est un élément à effet Peltier.

Selon un autre mode de réalisation avantageux, le ou l'un au moins des éléments à effet thermoélectrique est une résistance chauffante céramique.

Avantageusement encore, les récipients sont moins hauts que larges. Cette disposition permet de favoriser l'homogénéité de la transformation des aliments, du fait d'une épaisseur réduite favorisant la transmission des calories à partir du fond des récipients.

Selon un mode de réalisation avantageux, l'enceinte est fermée par un couvercle. En alternative, l'enceinte pourrait notamment présenter une construction de type four, avec une porte fermant un boîtier.

Avantageusement alors, le couvercle repose sur un boîtier. Cette disposition permet de limiter l'échauffement du couvercle. En alternative, le couvercle pourrait notamment reposer sur une cuve ou sur le fond recevant les récipients.

Avantageusement alors les récipients sont disposés dans une cuve logée dans le boîtier. Les parois latérales de la cuve permettent une meilleure homogénéité de température dans l'enceinte. En alternative, les récipients pourraient notamment être disposés sur un support logé dans le boîtier. Avantageusement encore, le couvercle comporte au moins un point bas agencé entre au moins deux desdits récipients adjacents. Cette disposition permet de favoriser la retombée des condensats entre lesdits récipients tout en limitant le volume de l'enceinte.

Avantageusement encore l'enceinte présente des renfoncements latéraux prévus pour loger les récipients. Cette disposition contribue à l'homogénéité de la transformation des aliments. De préférence, ces renfoncements latéraux sont ménagés dans les parois latérales de la cuve.

L'invention sera mieux comprise à l'étude de quatre exemples de réalisation, pris à titre nullement limitatif, illustrés dans les figures annexées, dans lesquelles :
- la figure 1 est une vue en éclaté d'un premier exemple de réalisation d'un appareil électrique pour la réalisation de préparations culinaires en portions séparées selon l'invention,
- la figure 2 est une vue en perspective d'un des récipients de l'appareil illustré à la figure 1,
- la figure 3 est une vue en perspective de l'appareil illustré à la figure 1, dans laquelle les récipients et le couvercle ont été retirés,
- la figure 4 est une vue de dessus de l'appareil illustré à la figure 1, dans laquelle le couvercle repose sur le boîtier,
- la figure 5 est une vue en coupe longitudinale de l'appareil illustré à la figure 4, entre les deux rangées de récipients,
- la figure 6 est une vue en coupe longitudinale de l'appareil illustré à la figure 4, par le milieu d'une des rangées de récipients,
- la figure 7 est une vue en coupe transversale de l'appareil illustré à la figure 4, par le milieu de l'un des éléments à effet thermoélectrique,
- la figure 8 est une vue de dessous de l'appareil illustré à la figure 4,
- la figure 9 est une vue en coupe transversale par le milieu des éléments à effet thermoélectrique d'un deuxième exemple de réalisation d'un appareil électrique pour la réalisation de préparations culinaires en portions séparées selon l'invention,
- la figure 10 est une vue en coupe longitudinale d'un troisième exemple de réalisation d'un appareil électrique pour la réalisation de préparations culinaires en portions séparées selon l'invention,
- la figure 11 est une vue en coupe transversale de l'appareil illustré à la figure 10, par le milieu de l'un des éléments à effet thermoélectrique,
- la figure 12 est une vue en coupe transversale par le milieu des éléments à effet thermoélectrique d'un quatrième exemple de réalisation d'un appareil électrique pour la réalisation de préparations culinaires en portions séparées selon l'invention.

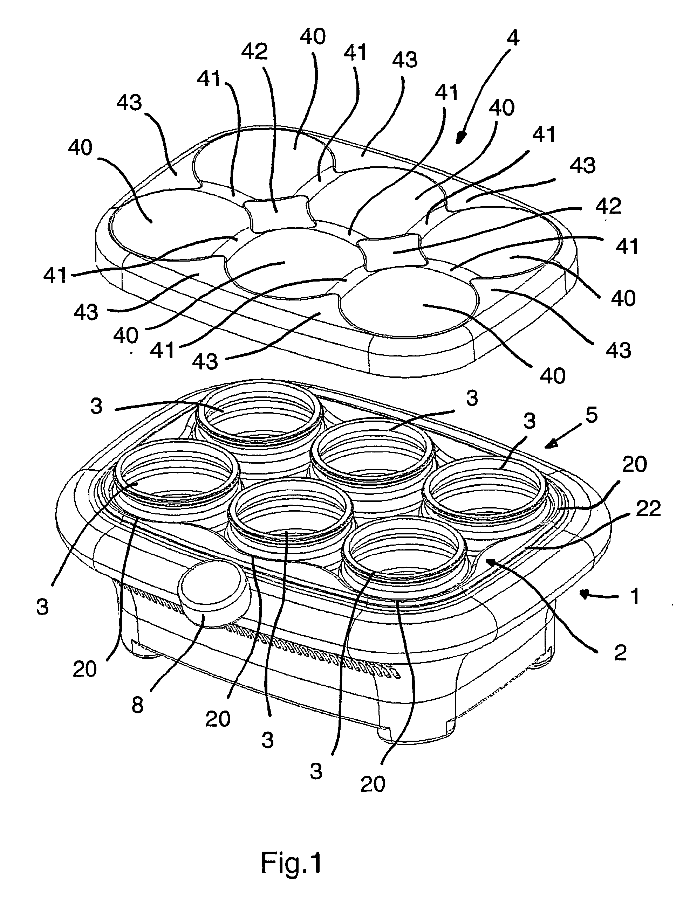

Un premier exemple de réalisation d'un appareil électrique pour la réalisation de préparations culinaires en portions séparées est illustré aux figures 1 à 8.

La figure 1 montre un appareil électrique pour la réalisation de préparations culinaires en portions séparées, comportant une enceinte 5 recevant six récipients 3. L'enceinte 5 comporte un boîtier 1 et un couvercle 4. L'enceinte 5 présente des renfoncements latéraux 20 prévus pour loger les récipients 3.

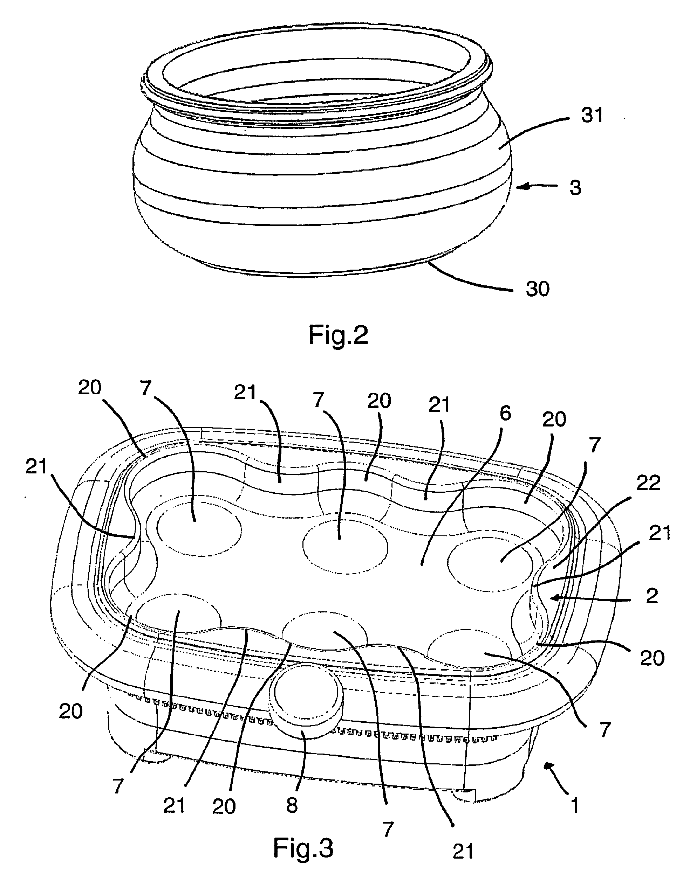

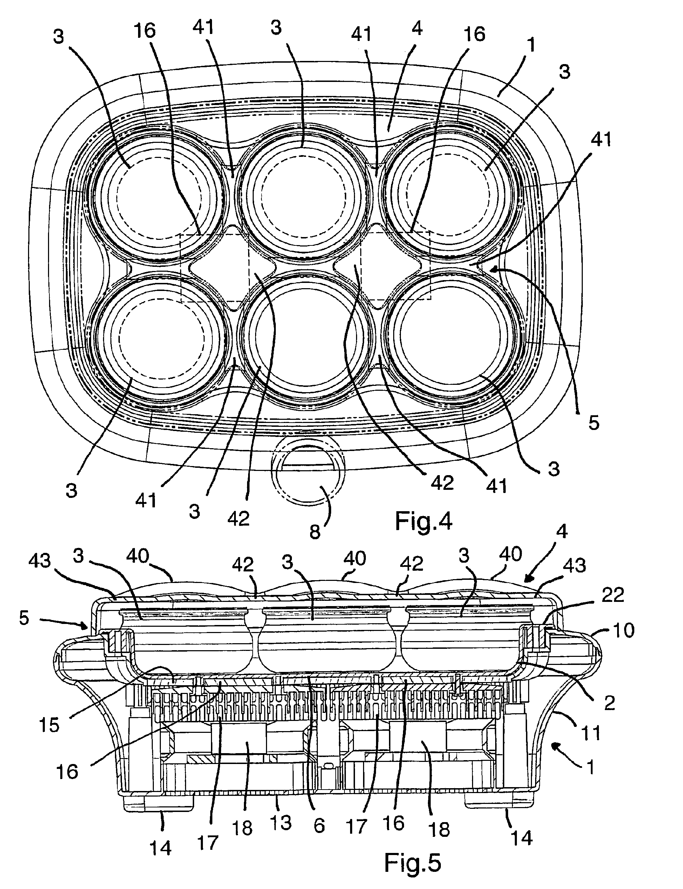

Tel que bien visible sur la figure 2, les récipients 3 sont moins hauts que larges. Les récipients 3 reposent sur un fond 6, mieux visible sur la figure 3. Le fond 6 est réalisé en matériau bon conducteur de chaleur, tel que par exemple en aluminium. Le fond 6 présente des bossages supérieurs 7 prévus pour recevoir les récipients 3. Le fond 6 est relié thermiquement à des moyens prévus pour modifier la température de l'enceinte 5, mieux visibles sur les figures 4 à 7.

Le fond 6 appartient à une cuve 2. Les faces avant et arrière de la cuve 2 comportent chacune deux protubérances latérales 21. Les faces latérales de la cuve 2 comportent chacune une protubérance latérale 21. Les protubérances latérales 21 de la cuve 2 délimitent les renfoncements latéraux 20. La cuve 2 présente un bord supérieur 22.

Tel que montré sur la figure 1, les récipients 3 sont disposés dans la cuve 2 logée dans le boîtier 1. Le boîtier 1 est avantageusement réalisé en matière plastique.

Tel que montré sur la figure 4, l'enceinte 5 est fermée par le couvercle 4. Le couvercle 4 est avantageusement réalisé en matériau transparent. Tel que mieux visible sur la figure 5, le couvercle 4 repose sur le boîtier 1. Le boîtier 1 comporte un corps supérieur 10 dans lequel est monté la cuve 2. Le corps supérieur 10 est assemblé sur un corps inférieur 11. La cuve 2 est montée dans une ouverture supérieure du corps supérieur 10.

Tel que visible sur la figure 1 ainsi que sur les figures 4 à 6, le couvercle 4 présente des parties bombées 40 disposées au dessus des récipients 3. Le couvercle 4 comporte des points bas 41, 42, 43 disposés autour des parties bombées 40. Les points bas 41 sont agencés entre deux récipients 3 adjacents. Les points bas 42 sont agencés entre quatre récipients 3 adjacents. Les points bas 43 sont agencés en périphérie d'un récipient 3.

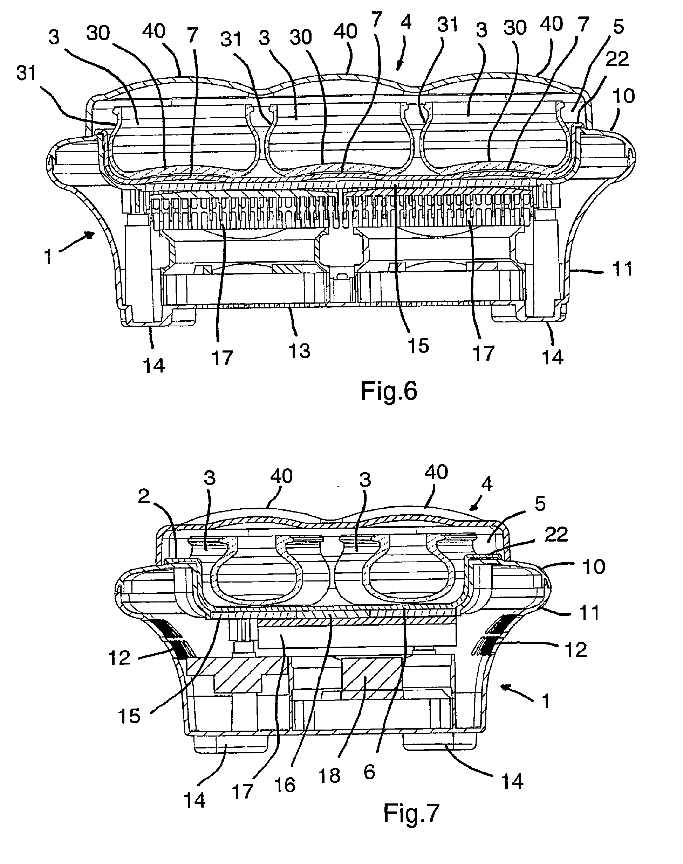

Tel que visible sur la figure 6, les récipients 3 présentent une paroi de fond 30 bombée vers le haut et une paroi latérale 31 dont le diamètre interne diminue dans la partie supérieure. L'épaisseur de la paroi de fond 30 est supérieure à celle de la paroi latérale 31. Cette disposition contribue à l'homogénéité de la transformation des aliments, notamment en cuisson. Les récipients 3 sont par exemple réalisés en verre.

Tel que visible sur les figures 5 à 7, les récipients 3 sont plus hauts que le bord supérieur de la cuve 2, ce qui permet de faciliter la préhension des récipients 3.

Selon une caractéristique de l'invention, les moyens prévus pour modifier la température de l'enceinte 5 comprennent au moins un élément à effet thermoélectrique 16 disposé sous le fond 6 principalement entre au moins deux récipients 3 adjacents.

Tel que visible sur les figures 4 à 7, l'enceinte 5 reçoit six récipients 3 répartis sur deux lignes et trois colonnes. Les moyens de chauffe comprennent deux éléments à effet thermoélectrique 16 disposés chacun sous le fond 6 entre les deux lignes de récipients 3 de part et d'autre de la colonne médiane. Les éléments à effet thermoélectrique 16 sont agencés dans une feuille d'isolant 15 disposée sous le fond 6. La face supérieure des éléments à effet thermoélectrique 16 est en contact avec la face inférieure du fond 6 formée par la cuve 2. La surface de chacun des éléments à effet thermoélectrique 16 est inférieure à la surface de chacun des récipients 3.

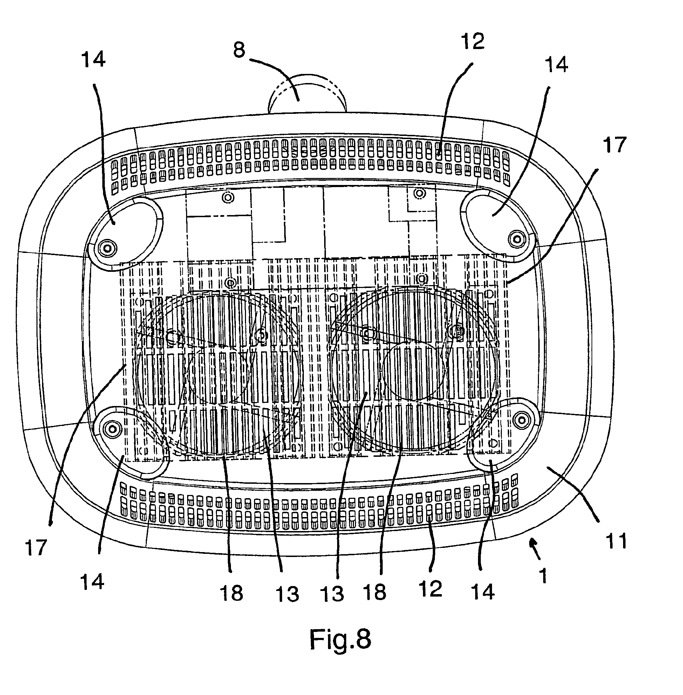

Deux radiateurs 17 sont montés sous la feuille d'isolant 15. Chacun des radiateurs 17 est en contact avec la face inférieure de l'un des éléments à effet thermoélectrique 16. Les radiateurs 17 sont fixés à la partie inférieure de la cuve 2, ce qui permet de maintenir les éléments à effet thermoélectrique 16 et la feuille d'isolant 15. De préférence, une isolation thermique est prévue au niveau de la fixation des radiateurs 17 avec la cuve 2. Le boîtier 1 présente des ouvertures latérales 12, visibles sur les figures 7 et 8. Le boîtier 1 présente des ouvertures inférieures 13, visibles sur les figures 5, 6 et 8. Le boîtier 1 présente des pieds 14 permettant de dégager les ouvertures inférieures 13. Les ouvertures latérales 12 et les ouvertures inférieures 13 sont ménagées dans le corps inférieur 11 du boîtier 10. Les pieds 14 sont issus du corps inférieur 11.

Plus particulièrement, les éléments à effet thermoélectrique 16 sont des éléments à effet Peltier.

Les éléments à effet thermoélectrique 16 sont chacun associés à un des ventilateurs 18. Chacun des ventilateurs 18 est disposé en regard de l'un des radiateurs 17. Grâce à la présence des ventilateurs 18, les éléments à effet thermoélectrique 16 peuvent être alimentés soit pour chauffer le fond 6, soit pour refroidir le fond 6. Les ventilateurs 18 permettent de refroidir la face inférieure des éléments à effet thermoélectrique 16 lorsque la face supérieure des éléments à effet thermoélectrique 16 refroidit le fond 6. Lorsque la face supérieure des éléments à effet thermoélectrique 16 chauffe le fond 6, l'utilisation des ventilateurs 18 n'est pas nécessaire.

Tel que visible sur la figure 4, le boîtier 1 comporte des moyens de commande 8 prévus pour commander le pilotage des éléments à effet thermoélectrique 16, par exemple en permettant à l'utilisateur de sélectionner une recette parmi différentes propositions. Le pilotage des éléments à effet thermoélectrique 16 peut s'effectuer notamment en température et en temps, ou encore en puissance et en temps.

Le fonctionnement de la présente invention est le suivant.

L'appareil peut être utilisé notamment pour réaliser des yaourts, des crèmes brûlées, des mousses, des flans, des entremets. L'utilisateur dispose les récipients 3 contenant les ingrédients à transformer dans la cuve 2 puis ferme l'enceinte 5 avec le couvercle 4. Le bord supérieur 22 de la cuve 2 correspond avantageusement au niveau de remplissage des récipients 3. L'utilisateur choisit ensuite avec le moyen de commande 8 le programme correspondant au type de préparation à réaliser. Les éléments à effet thermoélectrique 16 permettent une montée ou une descente en température précise et/ou l'obtention d'une température précise dans les récipients 3 disposés à l'intérieur de l'enceinte 5. La position des éléments à effet thermoélectrique 16, l'épaisseur de la paroi de fond 30 des récipients 3, la géométrie des récipients 3 avec leur hauteur réduite, les renfoncements latéraux 20 de l'enceinte 5, le couvercle 4, contribuent à l'homogénéité de la température à l'intérieur des récipients 3.

Lorsque la transformation des ingrédients est terminée, le programme de fonctionnement choisi peut prévoir un refroidissement contrôlé et/ou un maintien à température réfrigérée (inférieur à la température ambiante), pour favoriser la conservation des préparations réalisées, ou encore un maintien à une température de consommation optimale. L'appareil proposé permet ainsi d'éviter le transfert des préparations après leur réalisation.

L'appareil proposé est simple d'emploi et présente une utilisation particulièrement conviviale. Les préparations longues peuvent être lancées sans devoir calculer précisément la fin de leur réalisation pour transférer les récipients dans un réfrigérateur.

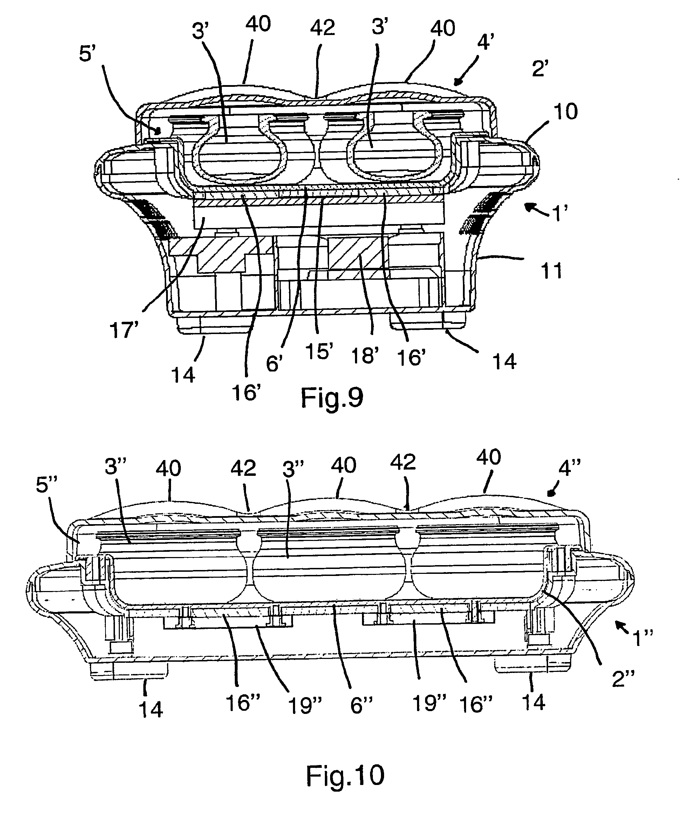

Un deuxième exemple de réalisation d'un appareil électrique pour la réalisation de préparations culinaires en portions séparées est illustré sur la figure 9.

L'appareil électrique pour la réalisation de préparations culinaires en portions séparées illustré sur la figure 9 comporte une enceinte 5' recevant des récipients 3'. L'enceinte 5' comporte un boîtier 1' et un couvercle 4'. Les récipients 3' reposent sur un fond 6' réalisé en matériau bon conducteur de chaleur et relié thermiquement à des moyens prévus pour modifier la température de l'enceinte 5'. Le fond 6' appartient à une cuve 2'.

Cet exemple de réalisation diffère de l'exemple de réalisation précédent en ce que les moyens prévus pour modifier la température de l'enceinte 5' comprennent des éléments à effet thermoélectrique 16' disposés sous le fond 6', chacun des éléments à effet thermoélectrique 16' étant disposé principalement en dessous de l'un des récipients 3'. Les éléments à effet thermoélectrique 16' sont également des éléments à effet Peltier.

Plus particulièrement, les récipients 3' sont au nombre de six et sont agencés selon deux lignes et trois colonnes. Les caractéristiques du boîtier 1, de la cuve 2, des récipients 3 et du couvercle 4 sont repris par le boîtier 1', la cuve 2', les récipients 3' et le couvercle 4'.

Un seul radiateur 17' est disposé sous l'isolant 15'. Le montage des éléments à effet thermoélectrique 16' est comparable au montage des éléments à effet thermoélectrique 16. Deux ventilateurs 18' sont disposés en regard du radiateur 17'.

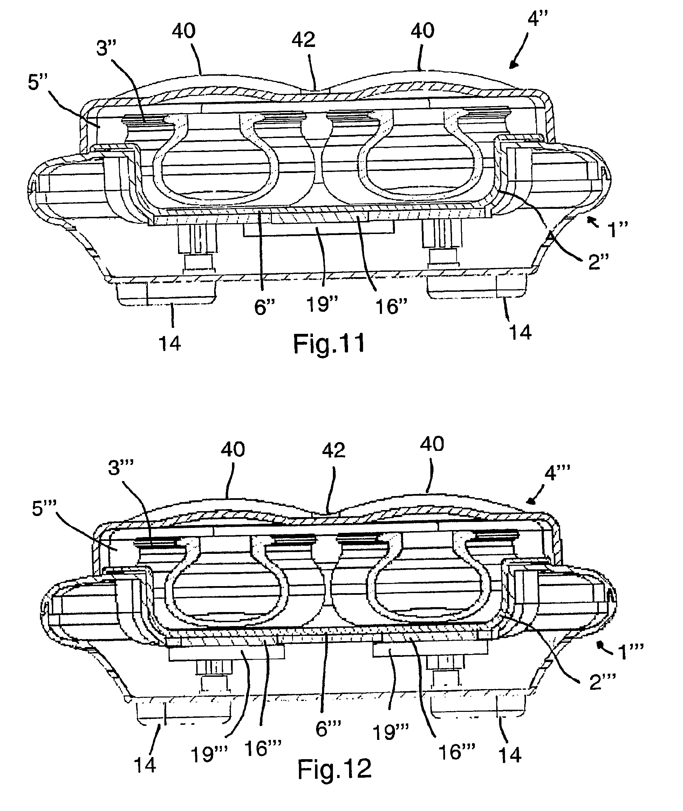

Un troisième exemple de réalisation d'un appareil électrique pour la réalisation de préparations culinaires en portions séparées est illustré sur les figures 10 et 11.

L'appareil électrique pour la réalisation de préparations culinaires en portions séparées illustré sur les figures 10 et 11 présente une construction voisine de celle de l'appareil illustré sur les figures 1 à 8 et comporte une enceinte 5" recevant des récipients 3". L'enceinte 5" comporte un boîtier 1 " et un couvercle 4". Les récipients 3" reposent sur un fond 6" réalisé en matériau bon conducteur de chaleur et relié thermiquement à des moyens prévus pour modifier la température de l'enceinte 5". Le fond 6" appartient à une cuve 2".

Les moyens prévus pour modifier la température de l'enceinte 5" comprennent des éléments à effet thermoélectrique 16". Chacun des éléments à effet thermoélectrique 16" disposés sous le fond 6" est disposé principalement entre au moins deux récipients 3" adjacents.

Cet exemple de réalisation diffère du premier exemple de réalisation en ce que les éléments à effet thermoélectrique 16" sont des résistances chauffantes céramique, lesdites résistances chauffantes céramique comportant un support céramique sur lequel sont disposées des pistes résistives.

Le boîtier 1" est dépourvu d'ouies et de ventilateurs et peut présenter une hauteur plus réduite. Les éléments à effet thermoélectrique 16" sont avantageusement maintenus par des traverses 19" montées sous le fond 6".

Cet exemple de réalisation est prévu uniquement pour chauffer les récipients 3" présents dans l'enceinte 5". Le refroidissement s'effectue naturellement.

Un quatrième exemple de réalisation d'un appareil électrique pour la réalisation de préparations culinaires en portions séparées est illustré sur la figure 12. L'appareil électrique pour la réalisation de préparations culinaires en portions séparées illustré sur la figure 12 comporte une enceinte 5"' recevant des récipients 3"'. L'enceinte 5"' comporte un boîtier 1 "' et un couvercle 4"'. Les récipients 3"' reposent sur un fond 6"' réalisé en matériau bon conducteur de chaleur et relié thermiquement à des moyens prévus pour modifier la température de l'enceinte 5"'. Le fond 6"' appartient à une cuve 2"'.

Les moyens prévus pour modifier la température de l'enceinte 5"' comprennent des éléments à effet thermoélectrique 16"'. Chacun des éléments à effet thermoélectrique 16"' disposés sous le fond 6"' est disposé principalement en dessous de l'un des récipients 3"'.

Cet exemple de réalisation diffère du troisième exemple de réalisation en ce que les éléments à effet thermoélectrique 16"' sont des résistances chauffantes céramique, lesdites résistances chauffantes céramique comportant un support céramique sur lequel sont disposées des pistes résistives.

Le boîtier 1"' est dépourvu d'ouies et de ventilateurs et peut présenter une hauteur plus réduite. Les éléments à effet thermoélectrique 16"' sont avantageusement maintenus par des traverses 19"' montées sous le fond 6"'.

Cet exemple de réalisation est également prévu uniquement pour chauffer les récipients 3"' présents dans l'enceinte 5"'. Le refroidissement s'effectue naturellement.

A titre de variante pour le premier et le troisième exemples de réalisation, les moyens prévus pour modifier la température de l'enceinte 5; 5" peuvent comprendre au moins un élément à effet thermoélectrique 16; 16" disposé sous le fond 6; 6" principalement entre au moins deux récipients 3; 3" adjacents.

A titre de variante pour le premier et le troisième exemples de réalisation, l'enceinte 5; 5" pourrait recevoir au moins quatre récipients 3 ; 3" agencés selon au moins deux lignes et au moins deux colonnes, ledit élément à effet thermoélectrique 16; 16" étant agencé entre deux lignes et deux colonnes.

A titre de variante, l'enceinte 5; 5'; 5" ; 5"' peut recevoir au moins deux récipients 3 ; 3' ; 3" ; 3"'.

A titre de variante, l'enceinte 5 ; 5' ; 5" ; 5"' ne comporte pas nécessairement un boîtier 1 ; 1'; 1"; 1"' et un couvercle 4; 4'; 4"; 4"', mais pourrait notamment présenter une construction de type four, avec une porte fermant un boîtier.

A titre de variante le ou l'un au moins des éléments à effet thermoélectrique 16; 16'; 16"; 16"' peut être associé à un ventilateur 18; 18'. L'appareil peut également être dépourvu de ventilateur 18 ; 18'.

A titre de variante le ou l'un au moins des éléments à effet thermoélectrique 16; 16' est susceptible d'être utilisé soit en chauffage soit en refroidissement.

A titre de variante le ou l'un au moins des éléments à effet thermoélectrique 16; 16'; 16"; 16"' est susceptible d'être utilisé uniquement en chauffage.

A titre de variante le ou l'un au moins des éléments à effet thermoélectrique 16; 16' est susceptible d'être utilisé uniquement en refroidissement.

A titre de variante, le couvercle 4 ; 4' ; 4" ; 4"' peut comporter au moins un point bas 41, 42 agencé entre au moins deux desdits récipients 3 ; 3' ; 3" ; 3"' adjacents.

A titre de variante, le nombre de ventilateurs 18 ; 18' n'est pas nécessairement égal au nombre d'éléments à effet thermoélectrique 16 ; 16'.

La présente invention n'est nullement limitée aux exemples de réalisation décrits et à leurs variantes, mais englobe de nombreuses modifications dans le cadre des revendications.

## Revendications

1. Appareil électrique pour la réalisation de préparations culinaires en portions séparées, comportant une enceinte (5' ; 5"') recevant au moins deux récipients (3' ; 3"') reposant sur un fond (6' ; 6"') réalisé en matériau bon conducteur de chaleur et relié thermiquement à des moyens prévus pour modifier la température de l'enceinte (5' ; 5'''), les moyens prévus pour modifier la température de l'enceinte (5' ; 5"') comprenant des éléments à effet thermoélectrique (16' ; 16"') disposés sous le fond (6' ; 6'''), chacun des éléments à effet thermoélectrique (16'; 16"') étant disposé principalement en dessous de l'un des récipients (3' ; 3'''), **caractérisé en ce que** le fond (6' ; 6"') présente des bossages supérieurs (7) prévus pour recevoir les récipients (3' ; 3"').

2. Appareil électrique pour la réalisation de préparations culinaires selon la revendication 1, **caractérisé en ce que** le ou l'un au moins des éléments à effet thermoélectrique (16') peuvent être alimentés soit pour chauffer le fond (6'), soit pour refroidir le fond (6').

3. Appareil électrique pour la réalisation de préparations culinaires selon l'une des revendications 1 ou 2, **caractérisé en ce que** le ou l'un au moins des éléments à effet thermoélectrique (16') est associé à un ventilateur (18').

4. Appareil électrique pour la réalisation de préparations culinaires selon l'une des revendications 1 à 3, **caractérisé en ce que** le ou l'un au moins des éléments à effet thermoélectrique (16') est un élément à effet Peltier.

5. Appareil électrique pour la réalisation de préparations culinaires selon la revendication 1, **caractérisé en ce que** le ou l'un au moins des éléments à effet thermoélectrique (16"') est une résistance chauffante céramique.

6. Appareil électrique pour la réalisation de préparations culinaires selon l'une des revendications 1 à 5, **caractérisé en ce que** les récipients (3' ; 3''') sont moins hauts que larges.

7. Appareil électrique pour la réalisation de préparations culinaires selon l'une des revendications 1 à 6, **caractérisé en ce que** l'enceinte (5' ; 5''') est fermée par un couvercle (4' ; 4"').

8. Appareil électrique pour la réalisation de préparations culinaires selon la revendication 7, **caractérisé en ce que** le couvercle (4' ; 4''') repose sur un boîtier (1' ; 1"').

9. Appareil électrique pour la réalisation de préparations culinaires selon la revendication 8, **caractérisé en ce que** les récipients sont disposés dans une cuve (2' ; 2"') logée dans le boîtier (1' ; 1"').

10. Appareil électrique pour la réalisation de préparations culinaires selon l'une des revendications 7 à 9, **caractérisé en ce que** le couvercle (4' ; 4"') comporte au moins un point bas (41, 42) agencé entre au moins deux desdits récipients (3' ; 3"') adjacents.

11. Appareil électrique pour la réalisation de préparations culinaires selon l'une des revendications 1 à 10, **caractérisé en ce que** l'enceinte (5' ; 5"') présente des renfoncements latéraux (20) prévus pour loger les récipients (3' ; 3''').

## Patentansprüche

1. Elektrogerät für die Herstellung kulinarischer Zubereitungen in separaten Portionen, umfassend eine Umwandung (5'; 5'''), die mindestens zwei Gefäße (3'; 3''') aufnimmt, die auf einem Boden (6'; 6''') aufliegen, der aus einem die Wärme gut leitenden Material hergestellt ist und thermisch mit Mitteln verbunden ist, die vorgesehen sind, um die Temperatur der Umwandung (5'; 5''') zu ändern, wobei die Mittel, die vorgesehen sind, um die Temperatur der Umwandung (5'; 5''') zu ändern, Elemente mit thermoelektrischem Effekt (16'; 16''') umfassen, die unter dem Boden (6'; 6''') angeordnet sind, wobei jedes der Elemente mit thermoelektrischem Effekt (16 ; 16''') hauptsächlich unter einem der Gefäße (3'; 3''') angeordnet ist, **dadurch gekennzeichnet, dass** der Boden (6'; 6''') obere Wölbungen (7) aufweist, die für die Aufnahme der Gefäße (3'; 3''') vorgesehen sind.

2. Elektrogerät für die Herstellung kulinarischer Zubereitungen nach Anspruch 1, **dadurch gekennzeichnet, dass** das oder wenigstens eines der Elemente mit thermoelektrischem Effekt (16') versorgt werden kann, um entweder den Boden (6') zu erhitzen, oder um den Boden (6') abzukühlen.

3. Elektrogerät für die Herstellung kulinarischer Zubereitungen nach einem der Ansprüche 1 oder 2, **dadurch gekennzeichnet, dass** das oder wenigstens eines der Elemente mit thermoelektrischem Effekt (16') mit einem Gebläse (18') verbunden ist.

4. Elektrogerät für die Herstellung kulinarischer Zubereitungen nach einem der Ansprüche 1 bis 3, **dadurch gekennzeichnet, dass** das oder wenigstens eines der Elemente mit thermoelektrischem Effekt (16') ein Element mit Peltier-Effekt ist.

5. Elektrogerät für die Herstellung kulinarischer Zubereitungen nach Anspruch 1, **dadurch gekennzeichnet, dass** das oder wenigstens eines der Elemente mit thermoelektrischem Effekt (16''') ein keramisches Heizelement ist.

6. Elektrogerät für die Herstellung kulinarischer Zubereitungen nach einem der Ansprüche 1 bis 5, **dadurch gekennzeichnet, dass** die Gefäße (3'; 3''') weniger hoch als breit sind.

7. Elektrogerät für die Herstellung kulinarischer Zubereitungen nach einem der Ansprüche 1 bis 6, **dadurch gekennzeichnet, dass** die Umwandung (5'; 5''') von einem Deckel (4'; 4''') verschlossen wird.

8. Elektrogerät für die Herstellung kulinarischer Zubereitungen nach Anspruch 7, **dadurch gekennzeichnet, dass** der Deckel (4'; 4''') auf einem Gehäuse (1 ; 1''') aufliegt.

9. Elektrogerät für die Herstellung kulinarischer Zubereitungen nach Anspruch 8, **dadurch gekennzeichnet, dass** die Gefäße in einem Behälter (2'; 2''') angeordnet sind, der im Gehäuse (1'; 1''') untergebracht ist.

10. Elektrogerät für die Herstellung kulinarischer Zubereitungen nach einem der Ansprüche 7 bis 9, **dadurch gekennzeichnet, dass** der Deckel (4'; 4''') wenigstens eine abgesenkte Stelle (41, 42) umfasst, die zwischen wenigstens zwei aneinander grenzenden Gefäßen (3'; 3''') angeordnet ist.

11. Elektrogerät für die Herstellung kulinarischer Zubereitungen nach einem der Ansprüche 1 bis 10, **dadurch gekennzeichnet, dass** die Umwandung (5'; 5''') seitliche Vertiefungen (20) aufweist, die für die Unterbringung der Gefäße (3'; 3''') vorgesehen sind.

## Claims

1. An electrical appliance for producing culinary preparations in separate portions, comprising a chamber (5'; 5''') receiving at least two containers (3'; 3''') resting on a bottom (6'; 6''') made of heating conducting material and thermally connected to means provided for changing the temperature of the chamber (5'; 5'''), the means for changing the temperature of the chamber (5'; 5''') comprising thermoelectric-effect elements (16'; 16''') arranged under the bottom (6'; 6'''), each of the thermoelectric-effect elements (16'; 16''') being substantially arranged below one of the containers (3'; 3'''), **characterised in that** the bottom (6'; 6''') has upper lobes (7) provided for receiving the containers (3'; 3''').

2. An electrical appliance for producing culinary preparations according to claim 1, **characterised in that** the or at least one of the thermoelectric-effect elements (16') may be powered either to heat the bottom (6'), or to cool the bottom (6').

3. An electrical appliance for producing culinary preparations according to one of claims 1 or 2, **characterised in that** the or at least one of the thermoelectric-effect elements (16') is associated with a fan (18').

4. An electrical appliance for producing culinary preparations according to one of claims 1 to 3, **characterised in that** the or at least one of the thermoelectric-effect elements (16') is a Peltier-effect element.

5. An electrical appliance for producing culinary preparations according to claim 1, **characterised in that** the or at least one of the thermoelectric-effect elements (16''') is a ceramic heating resistor.

6. An electrical appliance for producing culinary preparations according to one of claims 1 to 5, **characterised in that** the containers (3'; 3''') are shorter than they are wide.

7. An electrical appliance for producing culinary preparations according to one of claims 1 to 6, **characterised in that** the chamber (5'; 5''') is closed by a lid (4'; 4''').

8. An electrical appliance for producing culinary preparations according to claim 7, **characterised in that** the lid (4'; 4''') rests on a housing (1'; 1''').

9. An electrical appliance for producing culinary preparations according to claim 8, **characterised in that** the containers are arranged in a bowl (2'; 2''') within the housing (1'; 1 ''').

10. An electrical appliance for producing culinary preparations according to one of claims 7 to 9, **characterised in that** the lid (4'; 4''') comprises at least one low point (41, 42) arranged between at least two of said adjacent containers (3'; 3''').

11. An electrical appliance for producing culinary preparations according to one of claims 1 to 10, **characterised in that** the chamber (5'; 5"') has lateral recesses (20) provided to house the containers (3'; 3''').
